# EUROPEAN PATENT APPLICATION

(11) **EP 2 950 373 A1**
(43) Date of publication of application: **02.12.2015**
(21) Application number: 14743353.6
(22) Date of filing: 20.01.2014
(51) Int. Cl.: H01M 4/58, H01M 4/36

(54) **POSITIVE ELECTRODE ACTIVE MATERIAL/GRAPHENE COMPOSITE PARTICLES, AND POSITIVE ELECTRODE MATERIAL FOR LITHIUM ION BATTERY**

(30) Priority: 23.01.2013 JP 2013009841
(71) Applicant: Toray Industries, Inc., Tokyo 103-8666 (JP)
(72) Inventor: KAWAMURA, Hiroaki, Otsu-shi Shiga 520-8558 (JP); KUBOTA, Yasuo, Otsu-shi Shiga 520-8558 (JP); TAMAKI, Eiichiro, Otsu-shi Shiga 520-8558 (JP); MATSUSHITA, Miyuki, Otsu-shi Shiga 520-8558 (JP); YANG, Hanxiao, Otsu-shi Shiga 520-8558 (JP)
(74) Representative: Kador & Partner
(86) International application number: PCT/JP2014/050914
(87) International publication number: WO 2014/115670

(57) **Abstract**

To provide: positive electrode active material/graphene composite particles, which are for a positive electrode active material of a lithium ion battery having low electron conductivity, and with which electron conductivity is improved while suppressing hindrance of lithium ion extraction/insertion into active material particles; and a positive electrode material for a lithium ion battery, said positive electrode material comprising said composite particles. [Solution] The present invention provides: positive electrode active material/graphene composite particles; and a composite particle-like positive electrode material which is used in a lithium ion battery, and which is obtained by combining, with a matrix including graphene, positive electrode active material particles, said positive electrode material wherein, a value obtained by dividing the proportion of carbon (%) in a material surface measured by way of an X-ray photoelectron measurement, by the proportion of carbon (%) in the whole material, is in the range 1.5 to 7 inclusive.

## Description

### TECHNICAL FIELD

The present invention relates to a positive electrode active material/graphene composite particles formed by formation of graphene/positive electrode active material for a lithium ion cell composite, and a positive electrode material for a lithium ion battery composed of the positive electrode active material/graphene composite particles.

### BACKGROUND ART

A lithium ion secondary battery has been widely used for information-related mobile communication electronic equipment such as mobile phones and laptop personal computers as a battery capable of attaining higher voltage and higher energy density compared to the conventional nickel-cadmium battery and nickel metal hydride battery. With regard to the lithium ion secondary battery, it is expected that the opportunity of being utilized for onboard use in which the battery is incorporated into electric vehicles, hybrid electric vehicles and the like as a means for solving an environmental problem or industrial use such as electric power tools will further increase in the future.

In the lithium ion secondary battery, a positive electrode active material and a negative electrode active material serve as an important factor determining a capacity and power. In a conventional lithium ion secondary battery, lithium cobalt oxide (LiCoO₂) is used for the positive electrode active material and carbon is used for the negative electrode active material in many cases. However, as use of a lithium ion battery, for example, a hybrid automobile or an electric automobile, is increased in recent years, the lithium ion battery comes to be required not only to improve a capacity but also to improve power, that is, to extract more capacity in a short time. In order to increase power of a battery, it is necessary to increase the conductivity of lithium ions simultaneously with the increase of electron conductivity of the active material. Particularly, materials such as lithium cobalt oxide (LiCoO₂), a layered oxide-based active material (Li (Ni_{1/3}Mn_{1/3}Co_{1/3}) O₂) referred to as a ternary system, which is derivative from the lithium cobalt oxide or lithium manganate (LiMn₂O₄) are put to practical use as the positive electrode active material; however, since the electron conductivity of these materials is low, currently, a conductive additive such as acetylene black is added to the active material to augment the electron conductivity.

On the other hand, a next-generation active material is actively searched toward increases of capacity and power of the lithium ion secondary battery. In the positive electrode active material, olivine-based materials, namely, active materials such as lithium iron phosphate (LiFePO₄) and lithium manganese phosphate (LiMnPO₄) receive attention as a next-generation active material. Since the capacity of lithium iron phosphate or lithium manganese phosphate is about 1.2 times that of lithium cobalt oxide, their effects of increasing a capacity are limited, but these compound have a large merit in terms of stable supply and price since they do not contain cobalt of a rare metal. Moreover, in the olivine-based active materials, since oxygen is coupled with phosphorus by a covalent bond, the olivine-based active material also has a feature that oxygen is hardly released and a level of safety is high. Among these, lithium manganese phosphate can be expected to contribute to an increase of power since when it is used as a positive electrode active material of a lithium ion secondary battery, a discharge potential is high. However, the olivine-based positive electrode active material can hardly extract an inherent capacity merely by mixing with acetylene black in contrast to lithium cobalt oxide (LiCoO₂) or the like. Particularly, since lithium manganese phosphate is further lower in electron conductivity among the olivine-based active material, it does not lead to practical use.

As described above, in both of the active material put to practical use and the active material expected as a next-generation one, that electron conductivity is low is a problem of the positive electrode active material. However, when as before, merely adding and mixing a conductive additive such as acetylene black, since the active material is not uniformly mixed with the conductive additive at a level of nano order, it is difficult to improve electron conductivity on each active material particle, and various trials toward further improvement of electron conductivity are reported.

One of these trials is that a solution in which an active material and a conductive additive are uniformly dispersed is sprayed to make particles (e.g., Patent Document 1). According to this method, it is possible to make a structure in which the conductive additive is contained in the secondary particle in definite proportion and active materials are in contact with each other the conductive additive interposed. Accordingly, it can be expected that the conductive additive can function more effectively than the case where the active material is merely mixed with the conductive additive. Further, it is reported that a similar secondary particle is produced by a method of mixing an active material and a conductive additive together with some solvent using a mixer (e.g., Patent Document 2).

As another trial, a technique is reported, in which by mixing an active material and a carbon source such as sugar, and obtaining carbon during heating the mixture, the active material is coated with carbon (e.g., Patent Document 3). According to this method, since the active material is uniformly coated with carbon, it is expected to improve the electron conductivity of the active material.

As another trial, a technique of winding fibrous carbon around the active material is reported (e.g., Patent Document 4). According to this technique, it can be expected that the electron conductivity of the active material is improved by winding the fibrous carbon around the active material.

In addition to these techniques, a technique of coating the active material with two-dimensional carbon is also reported (e.g., Patent Documents 5 to 7). In this technique, since a thickness of the two-dimensional carbon is.several nanometers or less, a surface area per weight is large, and it can be expected that the electron conductivity is improved while suppressing an amount of a conductive additive required per active material.

### PRIOR ART DOCUMENTS

### PATENT DOCUMENTS

Patent Document 1: Japanese Patent Laid-open Publication No. 2004-14340
Patent Document 2: Japanese Patent Laid-open Publication No. 2004-39538
Patent Document 3: Japanese Patent Laid-open Publication No. 2012-216473
Patent Document 4: Japanese Patent Laid-open Publication No. 2012-48963
Patent Document 5: Japanese Patent Laid-open Publication No. 2012-99467
Patent Document 6: JP 2013-513904 W
Patent Document 7: JP 2013-538933 W

### SUMMARY OF THE INVENTION

### PROBLEMS TO BE SOLVED BY THE INVENTION

When employing a method of Patent Document 1 or 2, it is possible to impart electron conductivity to the active material, but since surfaces of the active material particle obtained as a secondary particle and the positive electrode material of carbon are covered with carbon, this causes a problem that extraction from/insertion into the active material particle of the lithium ions are interfered with, resulting in deterioration of ionic conductivity though the electron conductivity of the secondary particle is improved.

When employing a method of Patent Document 3, it is possible to uniformly coat the active material particle with carbon; however, it is also afraid that extraction from/insertion into the active material particle of the lithium ions are interfered with since coating is applied to the entire surface of the active material particle. Moreover, when metal oxide such as lithium cobalt oxide (LiCoO₂) is subjected to the same treatment, there is also a fear that the metal oxide may be reduced by carbon.

In a method of Patent Document 4, since a conducting treatment is possible without interrupting contact between an active material particle and an electrolytic solution, it is thought that electron conductivity can be improved without deteriorating ionic conductivity. However, it is unclear how far the active material particle is covered with carbon in order to achieve ionic conductivity and electron conductivity simultaneously, and whether ionic conductivity and electron conductivity can be achieved simultaneously or not in the first place. Moreover, since fibrous carbon has a diameter of 10 nm or more, in the case of a nano particle active material with a small diameter in which a diameter of the active material particle is 100 nm or less, such a composite structure that the fibrous carbon is wound around the active material particle to cover the active material particle cannot be embodied, and it is impossible to impart sufficient electron conductivity to the active material. On the other hand, when an active material particle having a large particle diameter is used, it is not preferred since an intraparticle transfer distance of the lithium ion is increased, resulting in deterioration of ionic conductivity.

In a method of Patent Document 5, although a positive electrode active material and a graphene oxide are mixed in acetone using a ball mill, since acetone has as a low boiling point as about 56°C and easily volatilize due to heat generation during ball-milling, it is difficult to make use of high dispersibility of the graphene oxide in a polar solvent, and consequently the graphene oxide easily coagulates. Moreover, when the graphene oxide is reduced by high-temperature firing at 500°C to 800°C, it is not preferred since the existing particle easily grows simultaneously with the reduction and a particle diameter is increased due to particle's growth, and therefore an intraparticle transfer distance of the lithium ion is increased to deteriorate ionic conductivity.

In a method of Patent Document 6, although a mixture of a graphene oxide and lithium iron phosphate is dried and then pulverized by a ball mill, in the graphene oxide in a dry condition, high dispersibility in a polar solvent is not exerted, and therefore the graphene oxide easily coagulates in the ball mill. Moreover, since high-temperature firing at 4000°C to 700°C is employed for reducing the graphene oxide, the active material particle easily grows to deteriorate ionic conduction.

Patent Document 7 discloses a method of coating an active material nano particle with a graphene oxide to form a capsule, but this method is not preferred since when the capsulate active material nano particle is incorporated into a battery, graphene blocks bringing the active material into contact with an electrolytic solution to interfere with the transfer of lithium ions to or from the active material, resulting in deterioration of ionic conductivity.

As described above., in order to improve the power of the lithium ion secondary battery, it is required for the positive electrode active material to improve electron conductivity and ionic conductivity. However, in a conventional technology, it has been difficult to improve electron conductivity while adequately maintaining ionic conductivity.

It is an object of the present invention to provide a positive electrode material for a lithium ion battery which improves electron conductivity while suppressing hindrance of the extraction from/insertion into the active material particle of the lithium ions, an electrode formed by using the positive electrode material, and a lithium ion secondary battery formed by using the electrode.

### SOLUTIONS TO THE PROBLEMS

The present inventors made earnest investigations concerning such a structure that when forming a composite of an active material with a nano particle size and graphene to form a secondary particle, the graphene is kept within the secondary particle, and thereby the active material is exposed to the surface of a secondary particle and electron conductivity is improved while suppressing a reduction of ionic conductivity.

In order to solve the above-mentioned problems, the present invention employs the following constitution.

Positive electrode active material/graphene composite particles which are a composite particle-like positive electrode material for a lithium ion battery obtained by formation of positive electrode active material particles/matrix containing graphene composite, wherein a value obtained by dividing a ratio (%) of a carbon element at a material surface measured by way of X-ray photoelectron measurement, by a ratio (%) of a carbon element in the whole material is not less than 1.5 and not more than 7.

### EFFECTS OF THE INVENTION

According to the positive electrode active material/graphene composite particles of the present invention, it is possible to improve electron conductivity while suppressing hindrance of the extraction from/insertion into the active material particle of the lithium ions. Further, it is possible to provide a lithium ion secondary battery having a high capacity and high power by using the positive electrode material of the present invention.

### EMBODIMENTS OF THE INVENTION

### <Positive Electrode Active Material/Graphene Composite Particle>

Positive electrode active material/graphene composite particles of the present invention (hereinafter, sometimes referred to as merely "composite particle") is a particle obtained by formation of positive electrode active material particles/a matrix containing graphene (hereinafter, sometimes referred to as merely "matrix") composite, and it has principally use as a positive electrode material for a lithium ion battery.

The positive electrode active material capable of being used for the present invention is not particularly limited; however, from a capacity and power, and performance as a positive electrode material for a lithium ion battery, LiCoO₂, LiNiO₂, Li(NiₓCo_{y}Al_{z})O₂ (x + y + z = 1), Li (NiₓMn_{y}Co_{z}) O₂ (x + y + z = 1), Li(NiₓMn_{y})O₂ (x + y = 1) and Li₂MnO₃-Li(NiₓMn_{y}Co_{z})O₂ (x + y + z = 1), respectively known as a layered rock salt type; LiMn₂O₄, Li(MnₓNi_{y})₂O₄ (x + y = 1) and Li(MnₓAl_{y})₂O₄ (x + y = 1), respectively known as a spinel type; and olivine-based positive electrode active materials are suitable. Particularly, the present invention is suitable for the case where the olivine-based positive electrode active materials, in which electron conductivity and ionic conduction have a large effect on a capacity and power, are used.

In the present invention, the olivine-based positive electrode active materials refer to LiMPO₄, Li₂MPO₄F or Li₂MSiO₄ (in any of these, M is one or more metal elements selected from among Ni, Co, Fe and Mn), or mixtures thereof.

The positive electrode active material may contain, as a doping element, one or more metal elements selected from the group consisting of Na, Mg, K, Ca, Sc, Ti, V, Cr, Cu, Zn, Rb, Sr, Y, Zr, Nb, Mo, Tc, Ru, Rh, Pd, Ag, Cd, In, Sn, Cs and Ba in a weight ratio of less than 10% with respect to the active material.

The composite particles of the present invention are characterized in that a value obtained by dividing a ratio (%) of a carbon element at a material surface by a ratio (%) of a carbon element in the whole material is not less than 1.5 and not more than 7. This value indicates how far distribution of the matrix containing the graphene is biased toward the inside of the composite particle. That is, the value of not less than 1.5 and not more than 7 means that the matrix is in a state of being less-exposed to the surface since the distribution of the matrix is biased toward the inside of the composite particle. When the value is lower than 1.5, it is not preferred since the distribution of the matrix is excessively biased toward the inside of the composite particle and it becomes difficult to transfer electrons to or from the outside of the composite particle. The value is more preferably 2 or more in order to make it easier that the composite particle can perform the transfer of electrons to and from the outside. When the value is higher than 7, it is not preferred since the distribution of the matrix is biased toward the surface of the composite particle to interfere with the transfer of lithium ions to or from the inside of the composite particle. The value is more preferably 6 or less for facilitating easy transfer of lithium ions to or from the inside of the composite particle.

Moreover, in the present invention, the ratio of a carbon element at the surface, that is, a ratio of the number of carbon atoms in atoms at the surface of the composite particle is preferably 50% or less. A small ratio of a carbon element at the surface means that more active material particles are exposed to the surface of the composite particle, and hence it becomes possible to extract/insert lithium ions from and into the active material without being interfered with by the matrix and an improvement of ionic conductivity can be expected. The ratio of a carbon element at the surface of the composite particle is more preferably 30% or less, and moreover preferably 20% or less. Further, when an amount of carbon at the surface of the composite particle is too small, it is difficult to transfer electrons from and to the outside of the composite particle, and therefore the ratio of a carbon element at the surface is preferably 5% or more. The ratio of a carbon element at the composite particle surface can be measured by X-ray photoelectron spectroscopy. In the X-ray photoelectron spectrum, the proportion of a carbon atom in all elemental composition detected is taken as the ratio of a surface carbon. In the X-ray photoelectron spectroscopy, an excited X-ray is monochromatic Al K_{α1} and K_{α2} lines (1486.6 eV), and a diameter of X-ray was set to 200 µm, and a photoelectron escape angle was set to 45°. Further, in the present invention, the ratio of a carbon element in the whole composite particles is preferably not less than 2% and not more than 10%. When the ratio of a carbon element in the whole composite particles is 2% or more, sufficient electron conductivity can be achieved. On the other hand, when the ratio is more than 10%, ionic conduction tends to deteriorate since the carbon element interferes with movement of lithium ions though the electron conductivity is improved. In addition, the mass ratio of a carbon element contained in the composite particle of the present invention can be quantified by a carbon-sulfur analyzer. In a carbon-sulfur analyzer, a composite is heated in the air by a high-frequency, carbon contained in the composite is completely oxidized, and generated carbon dioxide is detected by infrared rays. As a measurement apparatus, a carbon-sulfur analyzer EMIA-810W manufactured by HORIBA, Ltd. is exemplified.

The composite particle of the present invention preferably has an average particle diameter of 100 nm or less. When the particle diameter is 100 nm or less, a distance by which lithium ions move within the composite particle is shortened, and consequently the ionic conductivity may be improved. The average particle diameter is more preferably 50 nm or less, and moreover preferably 30 nm or less in that a transfer distance of the lithium ion can be further shortened and the ionic conductivity can be more improved. Further, an average particle diameter of the composite particle-of the present invention is preferably not less than 0.5 µm and not more than 20 µm in view of the fact that when the composite particles are used as a positive electrode coating of a lithium ion secondary battery, a thickness of the coating is about not less than 10 µm and not more than 100 µm. When the average particle diameter of the composite particle is less than 0. 5 µm, it is not preferred since a coagulation power between particles is increased and coatability may be deteriorated, and when the average particle diameter is more than 20 µm, it is not preferred since this may causes irregular thickness of a coating.

A particle diameter of the positive electrode active material particle contained in the composite particle in the present invention can be measured by a transmission electron microscope. A cross-section of the composite particle is exposed by using an ion milling system, and the cross section is observed using a transmission electron microscope, and thereby a shape of the positive electrode active material-particle present in the composite particle can be observed. When by this technique, the positive electrode active material particle was observed at such a magnification that 50 to 200 positive electrode active material particles are present within a field of view, an average particle diameter of all particles within the field of view is defined as an average particle diameter of the positive electrode active material particle. A mean of a maximum diameter and a minimum diameter of a particle is taken as a particle diameter of one particle. The average particle diameter of the composite particle in the present invention refers to a median diameter measured by a laser diffraction scattering apparatus. The measurement by the laser diffraction scattering apparatus is carried out at a transmittance adjusted to 75% to 95% in an aqueous dispersion system.

The matrix in the composite particle of the present invention has at least a portion of the active material particles embedded therein and has a function of binding the active material particles to one another to form a composite particle, and the matrix structurally refers to a portion other than the active material particles in the composite particle. That is, viewed from a composite particle side, the active material particles are dispersed and distributed in the matrix.

It is preferred that the matrix intrinsically consists of only graphene in that the electrical conductivity of the matrix can be further increased by high electrical conductivity of graphene. That the matrix intrinsically consists of only graphene means that the matrix is preferably formed of only graphene; however, the matrix is allowed to contain a small amount of another material within a limit within which the effect of the present invention is not lost. Specifically, the matrix preferably contains the graphene in an amount of 90% or more. However, the matrix may contain, in a ratio of less than 50 wt%, conductive carbon materials other than graphene, for example, carbon blacks such as furnace black, acetylene black and ketjen black, graphite and carbon nanotube.

In addition, the graphene generally refers to a sheet of a sp²-bonded carbon atom (monolayer graphene), which has a thickness of an atom, but in the present invention, a substance having a flake-like morphology in which the monolayer graphenes are laminated is also referred to as graphene. Also, a substance, in which a part of the graphite structure of carbon is modified with a hydroxyl group, a carboxyl group, a ketone group or an epoxy group, shall be referred to as graphene.

In order to maintain efficient electron conductivity/ionic conductivity, the graphene preferably has high uniformity at a level of a crystallite size. Thus, in the composite particle of the present invention, the peak half bandwidth of the G band peak in Raman spectrometry is preferably 90 cm⁻¹ or less and more preferably 80 cm⁻¹ or less. Raman measurement in the present invention was performed at an excited wavelength of 514.5 nm using argon ion laser as excited laser. The higher uniformity of the graphene at a level of a crystallite size is, the smaller a peak half bandwidth of the G band peak is.

The matrix in the composite particle of the present invention preferably has voids. When the matrix has appropriate voids, the electrolytic solution within the composite particle smoothly moves and therefore ionic conductivity is improved. When the void ratio is too high, contact between the matrix and the positive electrode active material becomes poor and electron conductivity tends to deteriorate, and therefore the void ratio is preferably 50% or less. A more preferred void ratio is 40% or less, and moreover preferred void ratio is 30% or less. On the other hand, when the void ratio is too low, movement of the electrolytic solution is slow and ionic conductivity tends to deteriorate, and therefore the void ratio is preferably 10% or more. A more preferred void ratio is 15% or more, and moreover preferred void ratio is 20% or more. The void ratio of the conductive matrix containing graphene is measured by a method described in Example E described later.

### <Method for Producing Positive Electrode Active Material/Graphene Composite Particle>

The composite particle of the present invention can be produced, for example, by a step of mixing /pulverizing graphene oxide and positive electrode active material particles for a lithium ion battery and a step of reducing the graphene oxide. In addition to these steps, the composite particle can also be produced by a step of mixing /pulverizing graphene oxide and positive electrode active material particle precursor for a lithium ion battery and a step of reducing the graphene oxide to produce positive electrode active material particles from the positive electrode active material particle precursor.

The graphene oxide can be prepared by a publicly known method. Moreover, commercially available graphene oxide may be purchased. Graphite serving as a raw material of the graphene oxide may be either an artificial graphite or a natural graphite; however, the natural graphite is preferably used. The number of meshes to which a particle size of the raw material graphite corresponds is preferably 20000 or less, and more preferably 5000 or less.

A preparation method of the graphene oxide is preferably an improved Hummers' method. An example of the Hummers' method will be mentioned below. Graphite (e.g., black lead powder etc.) was used as a raw material, and to this, a concentrated sulfuric acid, sodium nitrate and potassium permanganate are added, and the resulting mixture is reacted under temperatures of 25°C to 50°C for 0.2 to 5 hours while being stirred. Thereafter, a reactant is diluted by adding deionized water to obtain a suspension,'and the suspension is reacted at a temperature of 80°C to 100°C for 5 to 50 minutes. Finally, hydrogen peroxide and deionized water are added, and the resulting mixture is reacted for 1 to 30 minutes to obtain a graphene oxide dispersion. The obtained graphene oxide dispersion is filtered and washed to obtain a graphene oxide dispersion.

A ratio between reactants, for example, black lead powder, concentrated sulfuric acid, sodium nitrate, potassium permanganate and hydrogen peroxide, is 10 g : 150 to 300 ml : 2 to 8 g : 10 to 40 g : 40 to 80 g. When concentrated sulfuric acid, sodium nitrate and potassium permanganate are added, the temperature is controlled by means of an ice bath. When hydrogen peroxide and deionized water are added, the mass of deionized water is 10 to 20 times the mass of hydrogen peroxide.

The graphene oxide preferably has an appropriate oxidation degree since high electrical conductivity is not exerted even after the reduction of the graphene oxide when the graphene oxide has been excessively oxidized. Specifically, it is preferred that an elemental ratio of oxygen atoms in the graphene oxide to carbon atoms is not less than 0.3 and not more than 1. The ratio of oxygen atoms in the graphene oxide to carbon atoms in the graphene oxide can be measured by an X-ray photoelectron spectroscopy.

The oxidation degree of the graphene oxide can be adjusted by varying an amount of an oxidant to be used for the oxidation reaction of graphite. Specifically, the larger the amounts of sodium nitrate and potassium permanganate to be used in the oxidation reaction are with respect to the amount of graphite, the higher the oxidation degree of the graphene oxide becomes, and the smaller the amounts of sodium nitrate and potassium permanganate are, the lower the oxidation degree of the graphene oxide becomes. A weight ratio of sodium nitrate to graphite is not particularly limited; however, it is preferably not less than 0.2 and not more than 0.8. A weight ratio of potassium permanganate to graphite is not particularly limited; however, it is preferably not less than 1 and not more than 4.

In addition, although in the composite particle of the present invention, the matrix is not necessarily composed of only graphene, hereinafter, the case where the matrix is composed of only graphene will be described as an example. In addition, when a material other than graphene is contained in the matrix, "graphene oxide" in the following description shall include the material.

In the present invention, a method of forming the positive electrode active material particles/graphene oxide composite, and a method of forming the positive electrode active material particle precursor/graphene oxide composite are not particularly limited, and it is possible to form a composite by using a publicly known mixer/kneader. Specifically, an automatic mortar, a three roll mill, a bead mill, a planetary ball mill, a homogenizer, a planetary mixer, a wet-jet mill, a dry-jet mill, a biaxial kneader or the like can be used, and among these mixers/kneaders, a planetary ball mill is suitably used in that a composite of the positive electrode active material or the positive electrode active material particle precursor and the graphene oxide can be formed at a level of nano size.

When the composite of the active material particles or the positive electrode active material particle precursor and the graphene oxide is formed by using a planetary ball mill, this composite formation is preferably performed through addition of pure water. While for the graphene oxide, a powdery graphene oxide is used, the graphene oxide has high compatibility with a polar solvent, especially water, and therefore the graphene oxide is dispersed well between the positive electrode active material particles during the treatment by the planetary ball mill by adding a small amount of water, and has a tendency to improve a discharge capacity when being used in a battery. An amount of water to be added is suitably about 5 to 15% by mass of the total mass of the positive electrode active material particles and the graphene oxide, or the positive electrode active material particle precursor and the graphene oxide. When the amount of water is less than 5%, the effect of water addition tends to be lowered, and when the amount is more than 15%, since the graphene oxide is distributed into water, a composite of the graphene oxide and the positive electrode active material particles or the positive electrode active material particle precursor tends to be hardly formed.

The composite particles of the present invention can be obtained by forming the graphene oxide/positive electrode active material particles composite as described above, and then reducing the graphene oxide by heating or the like. When' the graphene oxide is thermally reduced in the presence of the positive electrode active material, a heating temperature is preferably 400°C or lower since it is necessary to suppress the growth of a particle, and more preferably 200°C or lower in order to more suppress the growth of a particle. In order to adequately reduce the graphene oxide to develop electrical conductivity, the heating temperature is preferably 150°C or higher. An atmosphere during heating may be an air atmosphere if a heating temperature is 200°C or lower, but an inert gas atmosphere is preferred to avoid burning of the graphene if the heating temperature is higher than 200°C.

When the composite particles of the present invention are obtained by undergoing the step of reducing the graphene oxide and the step of producing positive electrode active material particles from the precursor after forming the graphene oxide/positive electrode active material particle precursor composite, these steps may be performed simultaneously by heating; however, alternatively, the graphene oxide may be reduced to graphene with use of a reducing agent, and then the positive electrode active material particles may be produced by heating.

A reduction technique of the graphene oxide may be a technique of using a reducing agent. The reducing agent referred to herein is limited to a substance which exists in a liquid or solid state at ordinary temperature, and it does not include a reducing gas. The reduction method of using a reducing agent is suitable for maintaining the ratio of functionalization in the graphene since the reduction does not proceed so much in this method as in the thermal reduction method in which an atmosphere is controlled.

Examples of the reducing agent include organic reducing agents and inorganic reducing agents. Examples of the organic reducing agents include aldehyde-based reducing agents, hydrazine derivative reducing agents, and alcoholic reducing agents, and among organic reducing agents, alcoholic reducing agents are particularly suitable since they can reduce the graphene oxide relatively mildly. Examples of the alcoholic reducing agents include methanol, ethanol, propanol, isopropyl alcohol, butanol, benzyl alcohol, phenol, catechol, ethanolamine, dopamine, ethylene glycol, propylene glycol, diethylene glycol, and the like, and benzyl alcohol, catechol and dopamine are particularly suitable.

Examples of the inorganic reducing agents include sodium dithionite, potassium dithionite, phosphorous acid, sodium borohydride, hydrazine and the like, and among the inorganic reducing agents, sodium dithionite and potassium dithionite are suitably used since they can reduce the graphene oxide while relatively maintaining a functional group.

In order to provide voids in the matrix, a method, in which an additive is added in forming the graphene oxide/positive electrode active material particles composite and the additive is removed after the formation of the composite particle, is preferably employed. Removal of the additive is preferably adapted to be completed concurrently with reduction of the graphene oxide.

The additive in the present invention is not particularly limited as long as it is a substance capable of being removed by heating or dissolution; however, the additive preferably has plasticity and can be mixed well with the graphene oxide. The phrase "having plasticity" referred to herein refers to having the property of being easily deformed in applying physical force and easily maintaining a deformed shape. Particularly is preferred a material which has such thermal plasticity that has flowability at elevated temperatures and does not have the flowability at ordinary temperatures. The additive easily penetrates inside of the graphene oxide and easily prepares voids by having plasticity. The additive capable of being mixed well with the graphene oxide indicates an additive which is specifically-soluble in a solvent such as water or N-methylpyrrolidone, in which the graphene oxide can be dissolved in an amount of 1 wt% or more. Further, when the composite of the active material particles and the graphene oxide is formed by using a planetary ball mill, the additive is preferably added as an aqueous solution so that the graphene oxide is mixed well with the additive.

Examples of the substance capable of being removed by heating or dissolution include water-soluble inorganic salts, sulfur, polymer and solutions thereof. As the substance capable of being removed by heating, a substance capable of being removed in an inert atmosphere at 400°C or lower is preferred.

Particularly, a polymer can be suitably used since many polymers have plasticity, and the polymer easily penetrates inside of the graphene oxide and easily prepares voids. Particularly, a polymer having thermal plasticity is preferred, and a polymer having a low glass transition temperature is preferred. The glass transition temperature of the polymer used for the additive is preferably 100°C or lower, and more preferably 50°C or lower.

Examples of the water-soluble inorganic salts include sodium chloride, potassium chloride, sodium nitrate, sodium sulfate, potassium nitrate, sodium carbonate, sodium hydrogen carbonate, potassium carbonate, and potassium hydrogen carbonate.

Examples of the polymers include polyethylene, polypropylene, polyethylene glycol, polypropylene glycol, polyvinyl alcohol, polyethylene terephthalate, polystyrene, polymethylmethacrylate, dextran, and copolymers thereof. Particularly, polyethylene glycol and polyvinyl alcohol are preferably used since they are water-soluble, are easily mixed with the graphene oxide, and can be removed only by heating.

When a solution is used for the preparation of voids, a solvent is not particularly limited; however, a solvent such as water or N-methylpyrrolidone, in which the graphene oxide can be dissolved, is preferred. The graphene oxide has high compatibility with a polar solvent.and particularly has very high solubility in water and N-methylpyrrolidone, and therefore if the additive can be dissolved in these solvents, it is suitable since the additive is easily mixed with the graphene oxide.

Since the void ratio of the matrix can be controlled by adjusting the amount of the additive to the graphene oxide. Thus, it is preferred to adjust the amount of the additive so that the void ratio may be not less than 10% and not more than 50%.

Since the relationship between the amount of the additive and the void ratio varies depending on the kind of additive, the preferable amount of the additive is not uniquely set; however, for example, when a polymer is used, a weight ratio of the amount of the additive to that of the graphene oxide is preferably not less than 0.3 and not more than 3. Further, the above-mentioned additives may be mixed for use. Those skilled in the art can control the void ratio of the resulting matrix so as to be in a predetermined range by adjusting the kind and the amount of the additive.

### EXAMPLES

Hereinafter, the present invention will be described in detail by way of Examples, but the present invention is not limited to these Examples. In addition, in Examples, Kynar HSV-900 produced by ARKEMA K.K. was used for polyvinylidene fluoride, and DENKA BLACK (registered trademark) produced by DENKI KAGAKU KOGYO K.K. was used for acetylene black. Properties in Examples were measured by the following methods. "Part (s) " in Examples means part (s) by weight unless otherwise specified.

### A. Calculation of Average Particle Diameters of Positive Electrode Active Material Particle and Composite Particle

An average particle diameter of the positive electrode active material particle.was measured by exposing a cross-section of the composite particle by using an ion milling system (manufactured by Hitachi High-Technologies Corporation, IM4000), and observing the cross-section by using a transmission electron microscope (manufactured by Hitachi High-Technologies Corporation, H-9000UHR III). As an average particle diameter of the composite particle, a median diameter measured by a laser diffraction scattering apparatus (MT3200II manufactured by Nikkiso Co., Ltd.) was used.

### B. Measurement of Ratio of Carbon Element at Composite Particle Surface

The ratio of a carbon element at the composite particle surface was measured by X-ray photoelectron measurement of the composite particle. Quantera SXM (manufactured by Physical Electronics, Inc. (PHI)) was used for measurement. An excited X-ray was monochromatic A1 Kα1 and Kα2 lines (1486.6 eV), and a diameter of X-ray was set to 200 µm, and a photoelectron escape angle was set to 45°.

### C. Measurement of Mass Ratio of Conductive Carbon Contained in Composite Particle

A mass ratio of conductive carbon contained in the composite particle was measured by using a simultaneous quantitative carbon-sulfur analyzer EMIA-920V (manufactured by HORIBA, Ltd.).

### D. Raman Measurement

Raman measurement was carried out by using Ramanor T-64000 (manufactured by Jobin Yvon GmbH/Atago Bussan Co., Ltd.). A beam diameter was 100 µm and argon ion laser (wavelength: 514.5 nm) was used as a light source.

### E. Measurement of Void Ratio

The void ratio was measured using an electron scanning microscope. Specifically, a cross section of the composite particle was exposed by an ion milling system (manufactured by Hitachi High-Technologies Corporation, IM4000), and the cross section was observed at a magnification of 10000 times using an electron scanning microscope to measure the void ratio. Of the cross section in which a composite is formed, a portion of the graphene matrix and a portion of the active material primary particles were distinguished from each other based on contrast difference. A ratio of an area of the voids in an area of the graphene matrix was determined by image processing, and the ratio was defined as a void ratio.

### F. Measurement of Charge-Discharge Characteristics

The electrode plate prepared in the following Examples was cut out into a piece of 15.9 mm in diameter as a positive electrode, a lithium foil cut out into a size of 16.1 mm in diameter and 0.2 mm in thickness was used as a negative electrode, Celgard #2400 (manufactured by Celgard Inc.) cut out into a size of 17 mm in diameter was used as a separator, and a solvent composed of ethylene carbonate containing LiPF₆ with a concentration of 1M and diethylene carbonate in proportions of 3 : 7 (volume ratio) was used as an electrolytic solution to prepare a 2032 type coin battery, and electrochemical evaluations were carried out. Measurement was carried out during repeated charge-discharge, and all charging were performed at a constant current rate of 0.1C until a voltage reached an upper limit voltage, and after reaching the upper limit voltage, the charge was continued while maintaining the voltage until a charge current is 0.01C. Measurement on discharge was carried out by discharging a battery at a constant current until a voltage reached a lower limit voltage, and the battery was discharged at a rate of 0.1C three times and subsequently discharged at a rate of 3C three times, and the capacity at the time of third discharge of each rate was taken as a discharge capacity.

Further, the upper limit and the lower limit voltages in the charging and discharging were varied, that is, specifically,
when the active material is LiMnPO₄, the upper limit voltage and the lower limit voltage were set to 4.4 V and 2.7 V, respectively,
when the active material is LiFePO₄, the upper limit voltage and the lower limit voltage were set to 4.0 V and 2.5 V, respectively,
when the active material is LiMn₂O₄, the upper limit voltage and the lower limit voltage were set to 4.3 V and 2.7 V, respectively, and
when the active material is LiNi_{1/3}Mn_{1/3}Co_{1/3}O₂, the upper limit voltage and the lower limit voltage were set to 4.2 V and 3.0 V, respectively.

### [Example 1-1] (Production 1 of Lithium Manganese Phosphate/Graphene Composite Particle)

A 85% phosphoric, acid aqueous solution and manganous sulfate pentahydrate (MnSO₄•5H₂O) were added to pure water so as to be 1 : 1 in the molar ratio of Mn and P, and the resulting mixture was stirred. Then, an ascorbic acid aqueous solution was added so as to be 0.01 : 1 in the molar ratio of ascorbic acid and manganese. Then, lithium hydroxide (LiOH) was added so as to be 3 : 1 : 1 in the molar ratio of Li, Mn and P. The resulting solution was subjected to a hydrothermal treatment at 200°C for 40 hours and washed with water to obtain LiMnPO₄ particles.

A natural graphite powder (produced by Shanghai Yifan Graphite Co. , Ltd.) whose particle size corresponds to 2000 mesh was used as a raw material, and to 10 g of the natural graphite powder in an ice bath were added 220 ml of a 98% concentrated sulfuric acid, 5 g of sodium nitrate and 30 g of potassium permanganate, and the resulting mixture was mechanically stirred for 1 hour, and a temperature of a mixed liquid was maintained at 20°C or lower. The mixed liquid was taken out from the ice bath, and stirred for 4 hours in a water bath at 35°C to be reacted, and thereafter 500 ml of ion-exchange water was added, and the resulting suspension obtained by adding was further reacted at 90°C for 15 minutes. Finally, 600 ml of ion-exchange water and 50 ml of hydrogen peroxide were added, and the resulting mixture was reacted for 5 minutes to obtain a graphene oxide dispersion. The dispersion was filtered, metal ions were washed with a dilute hydrochloric acid solution, and the acid was washed repeatedly with ion-exchange water until a pH of water becomes 7 to prepare a graphene oxide gel. The graphene oxide gel was lyophilized to obtain a graphene oxide powder. The elemental ratio of an oxygen atom to a carbon atom of the obtained graphene oxide powder was measured according to Measurement Example 1, and consequently the elemental ratio was 0.53.

The obtained LiMnPO₄ particles (1 g), the obtained graphene oxide powder (0.06 g), and seven zirconia balls (diameter 1 cm) were put in a 12 ml zirconia container and mixed at a rotational speed of 300 rpm for 6 hours by means of a planetary ball mill (type P-5 manufactured by Fritsch Gmbh) to obtain a composite particle precursor. Moreover, the composite particle precursor was heated in the air at 200°C for 6 hours by using an oven to reduce the graphene oxide to graphene, and thereby composite particles were obtained. Average particle diameters of the positive electrode active material particle and the composite particle were measured according to the above paragraph A., and consequently the average particle diameter of the positive electrode active material was 27 nm and the average particle diameter of the composite particle was 5.2 µm.

The ratio of a carbon element at the surface of the obtained composite particle was measured according to the above paragraph B. to yield 15.0%, and the mass ratio of carbon element contained in the composite particle was measured according to the above paragraph C. to yield 2.8%. Accordingly, a value obtained by dividing a ratio of a carbon element at the composite particle surface by a mass ratio of a carbon element contained in the whole composite particles was 5.4, and it was found that the carbon element exists within the composite particle more than at the composite particle surface. Raman measurement of the composite particle was carried out according to the above paragraph D., and consequently the peak half bandwidth was 75 cm⁻¹.

An electrode was prepared in the following way using the obtained composite particles. A mixture of the obtained composite particles (700 parts by weight), acetylene black (40 parts by weight) as a conductive additive, polyvinylidene fluoride (60 parts by weight) as a binder and N-methylpyrrolidone (800 parts by weight) as a solvent was mixed with a planetary mixer to obtain an electrode paste. The electrode paste was applied onto an aluminum foil (thickness: 18 µm) by using a doctor blade (300 µm) and dried at 80°C for 30 minutes to obtain an electrode plate.

The discharge capacity was measured according to the above paragraph F., and consequently it was 149 mAh/g at a rate of 0.1C, and was 124 mAh/g at a rate of 3C. The results of measurement are shown in Table 1.

### [Example 1-2] (Production 2 of Lithium Manganese Phosphate/Graphene Composite Particle)

Composite particles were prepared in the same manner as in Example 1-1 except for changing the amount of the graphene oxide powder, which is added for forming a composite with LiMnPO₄, to 0.12 g. The results of evaluating the prepared composite particles in the same manner as in Example 1-1 are shown in Table 1.

### [Example 1-3] (Production 3 of Lithium Manganese Phosphate/Graphene Composite Particle)

Composite particles were prepared in the same manner as in Example 1-1 except for changing the amount of the graphene oxide powder, which is added for forming a composite with LiMnPO₄, to 0.24 g. The results of evaluating the prepared composite particles in the same manner as in Example 1-1 are shown in Table 1.

### [Example 1-4] (Production 1 of Lithium Iron Phosphate/Graphene Composite Particle)

A 85% phosphoric acid aqueous solution and iron sulfate heptahydrate (FeSO₄•7H₂O) were added to pure water so as to be 1: 1 in the molar ratio of Fe and P, and the resulting mixture was stirred. Then, an ascorbic acid aqueous solution was added so as to be 0.01 : 1 in the molar ratio of ascorbic acid and iron. Then, lithium hydroxide (LiOH) was added so as to be 3 : 1 : 1 in the molar ratio of Li, Mn and P. The resulting solution was subjected to a hydrothermal treatment at 200°C for 40 hours and washed with water to obtain LiFePO₄ particles.

Composite particles were prepared in the same manner as in Example 1 except for changing lithium manganese phosphate to the obtained lithium iron phosphate, and further the results of evaluating the prepared composite particles in the same manner as in Example 1-1 are shown in Table 1.

### [Example 1-5] (Production 1 of Lithium Manganate/Graphene Composite Particle)

Composite particles were prepared in the same manner as in Example 1-1 except for changing lithium manganese phosphate to commercially available lithium manganate (LMO: LiMn₂O₄ available from Hohsen Corporation), and further the results of evaluating the prepared composite particles in the same manner as in Example 1-1 are shown in Table 1.

### [Example 1-6] (Production 1 of Ternary System Active Material/Graphene Composite Particle)

Composite particles were prepared in the' same manner as in Example 1 except for changing lithium manganese phosphate to a commercially available ternary system active material (NMC: LiNi_{1/3}Mn_{1/3}Co_{1/3}O₂ available from Hohsen Corporation), and further the results of evaluating the prepared composite particles in the same manner as in Example 1-1 are shown in Table 1.

### [Example 2-1] (Production 4 of Lithium Manganese Phosphate/Graphene Composite Particle)

Composite particles were prepared in the same manner as in Example 1-1 except for adding 0.1 g of pure water in forming the composite of LiMnPO₄ and the graphene oxide by using a planetary ball mill. The results of evaluating the prepared composite particles in the same manner as in Example 1-1 are shown in Table 1.

### [Example 2-2] (Production 2 of Lithium Iron Phosphate/Graphene Composite Particle)

Composite particles were prepared in the same manner as in Example 1-4 except for adding 0.1 g of pure water in forming the composite of LiFePO₄ and the graphene oxide by using a planetary ball mill. The results of evaluating the prepared composite particles in the same manner as in Example 1-1 are shown in Table 1.

### [Example 2-3] (Production 2 of Lithium Manganate/Graphene Composite Particle)

Composite particles were prepared in the same manner as in Example 1-5 except for adding 0.1 g of pure water in forming the composite of lithium manganese phosphate and the graphene oxide by using a planetary ball mill. The results of evaluating the prepared composite particles in the same manner as in Example 1-1 are shown in Table 1.

### [Example 2-4] (Production 2 of Ternary System Active Material/Graphene Composite Particle)

Composite particles were prepared in the same manner as in Example 1-6 except for adding 0.1 g of pure water in forming the composite of the ternary system active material and the graphene oxide by using a planetary ball mill. The results of evaluating the prepared composite particles in the same manner as in Example 1-1 are shown in Table 1.

### [Example 3-1] (Production of Composite Particle Using Step of Reducing Graphene Oxide to Graphene Using Reducing Agent)

In the procedure of Example 2-1, the composite particle precursor, which was obtained by forming a composite with use of the planetary ball mill, was not thermally reduced, and the composite particle precursor was dispersed in 100 g of pure water, 1 g of sodium dithionite was added, and the resulting mixture was maintained at 40°C for 1 hour while being stirred to reduce the graphene oxide. After the composite particles obtained by reduction were washed with water, the results of evaluating the composite particles in the same manner as in Example 1-1 are shown in Table 1.

### [Example 3-2] (Production of Composite Particle Undergoing Step of Forming Positive Electrode Active Material Particle Precursor/Graphene Oxide Composite)

As a raw material of the positive electrode active material, an aqueous solution which was formed of lithium hydroxide (LiOH), manganous sulfate (MnSO₄) and phosphoric acid (H₃PO₄) in the molar ratio of 1 : 1 : 1 and has a concentration of 0.1 mol/kg, was prepared. The aqueous solution was dried by spray drying to prepare an active material precursor gel of lithium manganese phosphate (LiMnPO₄) which is a positive electrode active material.

The obtained active material precursor gel (1 g), the graphene oxide powder (0.06 g), pure water (0.1 g) and seven zirconia balls (diameter 1 cm) were put in a 12 ml zirconia container and mixed at a rotational speed of 300 rpm for 6 hours by means of a planetary ball mill (type P-5 manufactured by Fritsch Gmbh) to obtain a composite particle precursor.

The obtained composite particle precursor was dispersed in 100 g of pure water, 1 g of sodium dithionite was added, and the resulting mixture was maintained at 40°C for 1 hour while being stirred to reduce the graphene oxide. After the composite particle precursor obtained by the reduction was washed with water, it was heated in the air at 600°C for 6 hours in a nitrogen atmosphere to produce a positive electrode active material from the positive electrode active material precursor to obtain composite particles. The results of evaluating the produced positive electrode active material in the same manner as in Example 1-1 are shown in Table 1.

### [Example 3-3] (Production of Composite Particle with Voids)

In the procedure of Example 2-1, 0.5 g of a 20% polyethylene glycol (molecular weight 100000) aqueous solution was added in forming a composite with use of the planetary ball mill to prepare a composite particle precursor.

The obtained composite particle precursor was dispersed in 100 g of pure water, 1 g of sodium dithionite was added, and the resulting mixture was maintained at 40°C for 1 hour while being stirred to reduce the graphene oxide, and further washed with water to prepare composite particles containing polyethylene glycol.

Moreover, the composite particles containing polyethylene glycol was heated in the air at 400°C for 6 hours to remove polyethylene glycol as an additive, and thereby composite particles with voids were obtained. The void ratio of the obtained composite particle was measured according to the above paragraph E. to yield 35%. The results of evaluating the prepared composite particles in the same manner as in Example 1-1 are shown in Table 1.

### [Comparative Example 1]

Composite particles were prepared in the same manner as in Example 1-1 except for changing the amount of the graphene oxide powder, which is added for forming a composite with LiMnPO₄, to 0.02 g. The results of evaluating the prepared composite particles in the same manner as in Example are shown in Table 1.

### [Comparative Example 2]

After LiMnPO₄ particles were prepared in the same manner as in Example 1-1, the obtained LiMnPO₄ particles (1.0 g) and seven zirconia balls (diameter 1 cm) were put in a 12 ml zirconia container and mixed at a rotational speed of 300 rpm for 6 hours by means of a planetary ball mill (type P-5 manufactured by Fritsch Gmbh) to obtain LiMnPO₄ nano particles. The obtained LiMnPO₄ nano particles and the graphene oxide (0.06 g) prepared in the same manner as in Example 1 were mixed with a mortar, and the resulting mixture was heated in the air at 200°C for 6 hours by using an oven to reduce the graphene oxide, and thereby composite particles were prepared. The results of evaluating the prepared composite particles in the same manner as in Example 1-1 are shown in Table 1.

### [Comparative Example 3]

Composite particles were prepared in the same manner as in Example 1-1 except that carbon to be added for forming a composite with LiMnPO₄ was changed from the graphene oxide to acetylene black (0.2 g) and heating in an oven was not performed. The results of evaluating the prepared composite particles in the same manner as in Example 1-1 are shown in Table 1.

### [Comparative Example 4]

Composite particles were prepared in the same manner as in Example 1-1 except that carbon to be added for forming a composite with LiMnPO₄ was changed from the graphene oxide to vapor phase growth carbon fibers (VGCF-H produced by Showa Denko K.K.) (0.2 g) and heating in an oven was not performed, but the composite particles were not spherical and were a mixture whose particles were not granulated and were highly uneven. The results of evaluating the prepared composite particles in the same manner as in Example 1-1 are shown in Table 1.

### [Comparative Example 5]

After LiFePO₄ particles were prepared in the same manner as in Example 1-4, the obtained LiFePO₄ particles (1 g), a 10 g/l sucrose aqueous solution (10 ml) and seven zirconia balls (diameter 1 cm) were put in a 12 ml zirconia container and mixed at a rotational speed of 300 rpm for 6 hours by means of a planetary ball mill (type P-5 manufactured by Fritsch Gmbh) to obtain a composite particle precursor. Furthermore, the composite particle precursor was heated at 700°C for 1 hour in a nitrogen gas having 3% of hydrogen mixed, and thereby composite particles with a carbon coat were prepared. The results of evaluating the prepared composite particles in the same manner as in Example 1-1 are.shown in Table 1.

**[Table 1]**

| | Positive Electrode Active Material | Average Particle Diameter of Positive Electrode Active Material Particle (nm) | Carbon Constituting Matrix | Peak Half Bandwidth of G Band Peak in Raman Measurement (cm⁻¹) | Ratio of Carbon Element at Surface of Positive Electrode Material (%) | Mass Ratio of Carbon Element Contained in Positive Electrode Material (%) | Value Obtained by Dividing Ratio (%) of Carbon Element at Positive Electrode Material Surface by Mass Ratio (%) of Carbon Element in Whole Material | Average Particle of Positive Electrode Material (µm) | Discharge Capacity (0.1C) | Discharge Capacity (3C) |
|---|---|---|---|---|---|---|---|---|---|---|
| Example 1-1 | LiMnPO₄ | 27 | graphene | 75 | 15.0 | 2.8 | 5.4 | 5.2 | 149 | 124 |
| Example 1-2 | LiMnPO₄ | 29 | graphene | 73 | 27.0 | 8.0 | 3.4 | 6.2 | 132 | 65 |
| Example 1-3 | LiMnPO₄ | 33 | graphene | 74 | 34.7 | 11.5 | 3.0 | 7.3 | 110 | 45 |
| Example 1-4 | LiFePO₄ | 38 | graphene | 73 | 15.5 | 2.8 | 5.5 | 9.9 | 156 | 148 |
| Example 1-5 | LMO | 88 | graphene | 72 | 18.9 | 3.1 | 6.1 | 8.3 | 130 | 125 |
| Example 1-6 | NMC | 68 | graphene | 76 | 14.1 | 2.7 | 5.2 | 7.7 | 156 | 148 |
| Example 2-1 | LiMnPO₄ | 29 | graphene | 75 | 13.0 | 2.8 | 4.6 | 4.2 | 153 | 130 |
| Example 2-2 | LiFePO₄ | 35 | graphene | 72 | 13.5 | 2.8 | 4.8 | 9.1 | 160 | 153 |
| Example 2-3 | IMO | 90 | graphene | 74 | 17.5 | 3.1 | 5.6 | 8.1 | 133 | 128 |
| Example 2-4 | NMC | 67 | graphene | 75 | 13.3 | 2.7 | 4.9 | 7.5 | 159 | 152 |
| Example 3-1 | LiMnPO₄ | 28 | graphene | 75 | 15.0 | 3.8 | 3.9 | 5.5 | 151 | 128 |
| Example 3-2 | LiMnPO₄ | 44 | graphene | 74 | 12.0 | 3.7 | 3.2 | 7.1 | 145 | 105 |
| Example 3-3 | LiMnPO₄ | 38 | graphene | 74 | 14.0 | 3.9 | 3.6 | 10.1 | 151 | 135 |
| Comparative Example 1 | LiMnPO₄ | 29 | graphene | 74 | 10.1 | 1.1 | 9.2 | 7.3 | 98 | 27 |
| Comparative Example 2 | LiMnPO₄ | 34 | graphene | 88 | 53.5 | 2.9 | 18.4 | 151 | 38 | 2 |
| Comparative Example 3 | LiMnPO₄ | 34 | acetylene black | 87 | 30.3 | 20.9 | 1.4 | 10.5 | 88 | 28 |
| Comparative Example 4 | LiMnPO₄ | 41 | VGCF | 91 | 43.5 | 5.4 | 8.1 | 30.1 | 35 | 1 |
| Comparative Example 5 | LiFePO₄ | 55 | amorphous carbon obtained by baking sucrose | 79 | 58.0 | 2.5 | 23.2 | 23.2 | 138 | 99 |

## Claims

1. Positive electrode active material/graphene composite particles which are a composite particle-like positive electrode material for'a lithium ion battery obtained by formation of positive electrode active material particles/matrix containing graphene composite, wherein a value obtained by dividing a ratio (%) of a carbon element at a material surface measured by way of X-ray photoelectron measurement, by a ratio (%) of a carbon element in the whole material is not less than 1.5 and not more than 7.

2. The positive electrode active material/graphene composite particles according to claim 1, wherein the ratio of a carbon element at a material surface is not less than 5% and not more than 50%.

3. The positive electrode active material/graphene composite particles according to claim 1 or 2, wherein the ratio of a carbon element in the whole material is not less than 2% and not more than 20%.

4. The positive electrode active material/graphene composite particles according to any one of claims 1 to 3, wherein a peak half bandwidth of a G band peak in Raman spectrometry is 90 cm-1 or less.

5. The positive electrode active material/graphene composite particles according to any one of claims 1 to 4, wherein an average particle diameter of the positive electrode active material particle is 100 nm or less and an average particle diameter of the composite particle itself is not less than 0.5 µm and not more than 20 µm.

6. The positive electrode active material/graphene composite particles according to any one of claims 1 to 5, wherein the matrix has voids.

7. The positive electrode active material/graphene composite particles according to claim 6, wherein a void ratio of the matrix is not less than 10% and not more than 50%.

8. The positive electrode active material/graphene composite particles according to any one of claims 1 to 7, wherein the positive electrode active material particle is an olivine-based active material particle.

9. A positive electrode material for a lithium ion battery comprising positive electrode active material/graphene composite particles according to any one of claims 1 to 8.
